# EUROPEAN PATENT SPECIFICATION

(11) **EP 0 989 419 B1**
(45) Date of publication and mention of the grant of the patent: **29.05.2002**
(21) Application number: 99118799.8
(22) Date of filing: 23.09.1999
(51) Int. Cl.: G02B 5/20

(54) **Composition for near infrared absorption filter, and near infrared absorption filter produced using said composition**
Zusammensetzung für im nahen Infrarotbereich absorbierende Filter und daraus hergestellte Filter
Composition pour filtre absorbant dans l'infrarouge proche et filtre obtenu avec ladite composition

(30) Priority: 24.09.1998 JP 26967698
(43) Date of publication of application: 29.03.2000
(73) Proprietor: Nisshinbo Industries, Inc., Chuo-ku, Tokyo 103-0013 (JP)
(72) Inventor: Hasegawa, Shun, Nisshinbo Industries, Inc, Adachi-ku, Tokyo 123-0843 (JP); Masuda Gen, c/o Nisshinbo Industries, Inc, Adachi-ku, Tokyo 123-0843 (JP)
(74) Representative: Laufhütte, Dieter, Dr.-Ing.

(56) References cited:
- EP-A- 0 044 911
- EP-A- 0 706 067
- EP-A- 0 767 221
- EP-A- 0 838 475
- GB-A- 1 133 348
- US-A- 3 670 025
- US-A- 4 705 887
- US-A- 5 354 514
- PATENT ABSTRACTS OF JAPAN vol. 1996, no. 12, 26 December 1996 (1996-12-26) -& JP 08 217811 A (OSAKA GAS CO LTD), 27 August 1996 (1996-08-27)

## Description

### Background of the Invention

### (1) Field of the Invention

The present invention relates to the use of a composition as near infrared absorption filter, as well as to a near infrared absorption filter produced using said composition. More particularly, the present invention relates to the use of a composition as near infrared absorption filter, which composition can give a transparent filter showing a very high transmittance for visible light and a high absorption for near infrared light, as well as to a near infrared absorption filter produced using said composition.

### (2) Description of the Related Art

In recent years, development works of plasma display panel have been made actively and commercial products thereof have been put into the market. Such plasma display panels often have a near infrared absorption filter as the front plate.

The near infrared absorption filter often used as the front plate of plasma display panel has been produced and used in various constitutions, for example, (1) a constitution in which a metal (e. g. silver) is vapor-deposited on the surface of a glass used as a filter substrate and (2) a constitution in which a near infrared absorption dye is added to an appropriate transparent polymer. However, in the former constitution, a large apparatus is necessary for production thereof and accordingly a high cost is incurred. In the latter constitution, absorption takes place in a visible light region as well, resulting in reduction in visible light transmittance.

There is also a constitution in which an organic copper is added to an appropriate transparent polymer. This constitution has the following problems. In general, organic coppers (e.g. copper acetate and copper stearate) have low solubility in solvent by themselves and, therefore, it is difficult to allow them to be present in a transparent polymer in a high concentration; moreover, they show the maximum absorption for wavelengths of 700 nm and the vicinity and, therefore, have no sufficient absorption for near infrared light. Hence, it is necessary to add phosphoric acid, thiourea or the like to an organic copper to shift the absorption to a near infrared side and, simultaneoulsy therewith, increase the solubility in the solvent.

Prior art document U.S. Patent 4,705,887 discloses aromatic polyvinylethers and active hydrogen compound reaction products thereof which have been found to provide fast heat curable molding compositions when used with various heat activated curing catalysts. As these catalysts for example diaryliodonium salts in combination with aromatic polyventylether soluble copper compounds, or dialkylhydroxyarylsulfonium salts in combination with certain organic oxidants are used.

Prior art document JP-8217811 discloses a process for producing a polymer having a narrow molecular weight distribution and excellent stereoregularity using an organic metal complex, specifically such as di-carboxylic acid-copper complex. To produce the di-carboxylic-acid-copper complex, at least one kind of an organic acid selected from a formic acid, an acetic acid, a trifluoroacetic acid and a propionic acid is added, as an additive, to a di-carboxylic acid dissolved in organic solvent, further at least one kind of an organic acid-copper solution selected from a copper formate and copper acetate.

Prior art document EP-0044911 is directed to an infrared absorbing polycarbonate eye protective lens. Said infrared absorbing polycarbonate eye protective lens is prepared from a polycarbonate resin having a meltflow value of about 12 to 120 and being substantially free of acidic and basic impurities and a bis(p-dialkylaminophenyl) [N,N-bis(p-dialkylaminophenyl)-p-aminophenyl]-aminium salt which is prepared by the oxidation of N,N,N',N'-tetraarylenediamines with silver salts. Said silver salts include silver trifluoroacetate as an oxidation agent.

Document U.S. 3,670,025 is directed to a class of aminium salts and the use of said salts as infrared absorbers. In producing said infrared absorbers silver salts including silver trifluoroacetate as oxidation agents are used.

U.K. Patent Specification 1,133,348 discloses a process for producing protective eye glasses, screens or spectacle lenses and protective eyewear produced by this process. A metal oxide or salt decomposes during polymerisation of monomers and/or during shaping of the plastics material to form the metal. Particles of the metal, for example silver or copper, are very finely and uniformly distributed throughout the plastics material and result in a high infrared absorption and low dispersion of the light.

U.S. Patent 5,354,514 discloses a near infrared absorbing composition and material comprising a specific thioamide compound and a copper compound and/or a lead compound. The composition and material of this disclosure provide an uniform absorption over a near IR-region without decreasing other properties.

European Patent Application EP 0 706 067 discloses a plastic optical filter formed of a plastic material comprising a copolymer obtained by copolymerizing a monomer which comprises a polymerizable functional group with at least one monomer copolymerizable therewith and an ionic metal component composed of a copper ion incorporated in the copolymer.

EP 0 838 475 is directed to a plasma display front panel comprising a transparent substrate which is produced by molding a resinous composition containing a monomer having an unsaturated double bond and/or polymer thereof, a phosphorus atom-containing compound and a copper atom-containing compound.

### Summary of the Invention

The present invention aims at alleviating the above-mentioned problems of the prior art and providing the use of a composition as near infrared absorption filter, which composition can give a transparent filter showing a very high transmittance for visible light and a high absorption for near infrared light, and a near infrared absorption filter produced using the above composition.

According to the present invention, there are provided:

The use of a composition as near infrared absorption filter, obtained by adding copper trifluoroacetate to a transparent polymer, and
a near infrared absorption filter produced using the above composition.

### Brief Description of the Drawings

Fig. 1 is a chart showing the transmittance at 200 to 1,100 nm, of the near infrared absorption filter obtained in Example 1.
Fig. 2 is a chart showing the transmittance at 200 to 1,1000 nm, of the near infrared absorption filter obtained in Comparative Example 1.
Fig. 3 is a chart showing the transmittance at 200 to 1,100 nm, of the near infrared absorption filter obtained in Comparative Example 2.
Fig. 4 is a chart showing the transmittance at 200 to 1,100 nm, of the near infrared absorption filter obtained in Example 2.
Fig. 5 is a chart showing the transmittance at 200 to 1,100 nm, of the near infrared absorption filter obtained in Example 3.

### Detailed Description of the Invention

The present invention is hereinafter described in detail.

As to the kind of the transparent polymer used in the composition for near infrared absorption filter according to the present invention, there is no particular restriction as long as a polymer having good transparency is used. However, the polymer is, for example, one composed mainly of a polyvinyl alcohol, a polyvinyl butyrate or a poly(meth)acrylate.

When a polyvinyl alcohol or a polyvinyl butyrate is used as the transparent polymer, there is no particular restriction as to the kind thereof; and there can be mentioned a polyvinyl alcohol or a polyvinyl butyrate each having an average polymerization degree of, for example, about 300 to 3,000.

When a poly(meth)acrylate is used as the transparent polymer, there is no particular restriction, either, as to the kind thereof; and there can be mentioned an ordinary poly (meth)acrylate obtained by polymerizing a (meth)acrylate monomer using a radical polymerization initiator.

The (meth)acrylate monomer can be exemplified by lower alkyl acrylates and lower alkyl methacrylates, each having an alkyl group of 1 to 8 carbon atoms, such as methyl acrylate, methyl methacrylate, ethyl acrylate, ethyl methacrylate, n-propyl acrylate, n-propyl methacrylate and the like; modified alkyl acrylates and modified alkyl methacrylates, each having a modified alkyl group which is an alkyl group substituted with other functional group, such as glycidyl acrylate, glycidyl methacrylate, 2-hydroxybutyl methacrylate and the like; polyfunctional acrylates and polyfunctional methacrylates such as ethylene glycol dimethacrylate, diethylene glycol dimethacrylate, polyethylene glycol dimethacrylate, 1,4-butanedi ol diacrylate, 1,4-butanediol dimethacrylate and the like; and carboxylic acids such as acrylic acid, methacrylic acid and the like.

These (meth)acrylate monomers can be used singly or in combination of two or more kinds.

The composition for near infrared absorption filter according to the present invention is obtained by adding copper trifluoroacetate to the above-mentioned transparent polymer. The present inventors found out that this copper trifluoroacetate shows an absorption in a wide near infrared region of 800 nm and the vicinity but substantially no absorption in a visible light region and further has high solubility in solvents and, therefore, copper trifluoroacetate can per se (1) absorb a near infrared region light of 800 nm and the vicinity and (2) be added to a transparent polymer in a high concentration [in the prior art, the (1) and (2) have been possible only by using phosphoric acid, thiourea or the like]. The above finding has led to the completion of the present invention.

Copper trifluoroacetate can be easily produced, for example, by mixing of commercial copper acetate, copper carbonate or the like with trifluoroacetic acid and subsequent solvent removal by distillation or recrystallization. Alternatively, commercial copper trifluoroacetate may be used.

The amount of copper trifluoroacetate added to transparent polymer is determined in view of the thickness and absorption required for the near infrared absorption filter produced from the present composition. When the absorption of filter is set at a given level, the addition amount of copper trifluoroacetate must be large when a thin near infrared absorption filter is produced, and may be small when a thick near infrared absorption filter is produced.

The addition amount of copper trifluoroacetate can specifically be, for example, 0.1 mg per cm² of near infrared absorption filter produced from present composition, to the saturation concentration in solution used in production of near infrared absorption filter, preferably 0.1 to 50 mg per cm², more preferably 0.5 to 15 mg per cm².

When the addition amount of copper trifluoroacetate is smaller than the above range, no desired absorption may be obtained. When the addition amount is too large, reduction in visible light transmittance may appear.

The present composition for near infrared absorption filter can be produced by simply adding copper trifluoroacetate to a transparent polymer. There is no particular restriction as to the method. When the present composition for near infrared absorption filter is made into a film-shaped near infrared absorption filter by casting or the like, the present composition may be prepared as a solution using an appropriate solvent.

The solvent used for the above purpose can be any solvent which can dissolve the transparent polymer used in the present invention. The solvent includes, for example, ether type solvents such as tetrahydrofuran (THF), diethyl ether and the like; ester type solvents such as ethyl acetate, methyl acetate, butyl acetate and the like; alcohol type solvents such as methanol, ethanol, isopropyl alcohol, butanol and the like; chlorine-containing solvents such as chloroform, methylene chloride and the like; aprotic polar solvents such as dimethylformamide (DMF), dimethyl sulfoxide (DMSO), N-methylpyrr olidone (NMP) and the like; ketone type solvents such as acetone, methyl ethyl ketone (MEK) and the like; and water. In the present composition for near infrared absorption filter, use of water or an alcohol type solvent is preferred because they can prevent salt deposition in the composition.

The present composition for near infrared absorption filter may further contain a near infrared absorber, an ultraviolet absorber, a crosslinking agent, an antioxidant, a polymerization retarder, a dye, a pigment and a color-adjusting agent in view of the kind of the transparent polymer used, etc.

The near infrared absorption filter of the present invention is produced using a composition obtained as above. When the transparent polymer used in the composition is a polyvinyl alcohol or a polyvinyl butyrate, a solution of the transparent polymer dissolved preferably in water or a lower alcohol is mixed with copper trifluoroacetate; the mixture is stirred until it becomes a uniform solution; the solution is coated on an appropriate substrate by means of casting or the like and then dried; thereby, a film-shaped near infrared absorption filter can be obtained.

When the transparent polymer is a poly(met h)acrylate, a (meth)acrylate monomer is added and sufficiently mixed with copper trifluoroacetate to obtain a solution; a polymerization initiator is added to the solution; the resulting solution is placed in an appropriate vessel and subjected to thermal polymerization or photopolymerization; and a resulting poly(meth)acrylate of plate form is taken out of the vessel.

Of course, it is possible to dissolve a poly(m eth)acrylate of low polymerization degree in a solvent and subject the resulting solution to the same operation as in using, as a transparent polymer, a polyvinyl alcohol or a polyvinyl butyrate, to obtain a film-shaped near infrared absorption filter.

The near infrared absorption filter of the present invention can be obtained in a film shape or a plate shape, and can be used as, for example, a near infrared absorption filter for plasma display panel.

The present invention is described in more detail below by way of Examples.

### Example 1

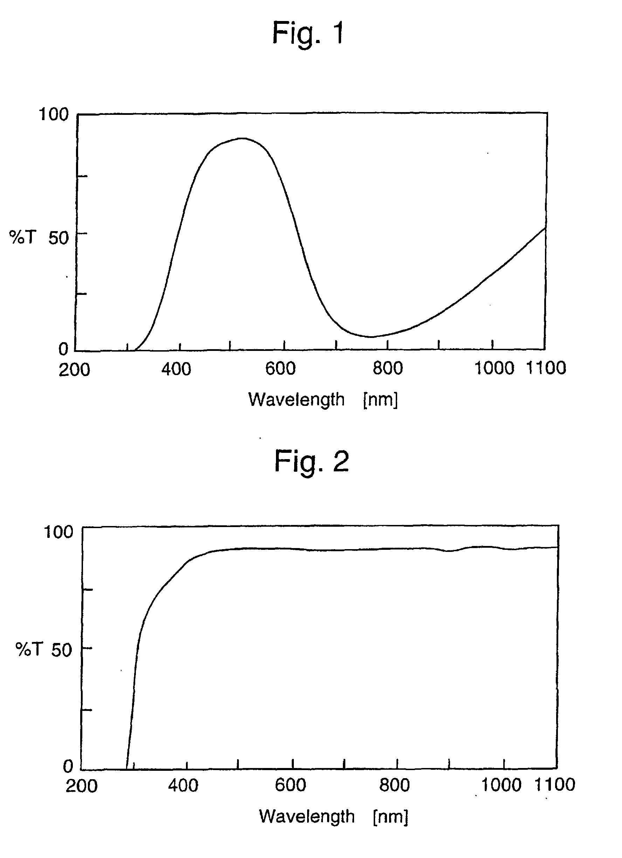

To 100 parts by weight of methyl methacrylate (a product of Tokyo Kasei Kogyo Co., Ltd.) were added 1.3 parts by weight of copper trifluoroacetate and 0.26 part by weight of 2,2'-azobis(2,4-dimethylvaleronitrile) (a product of Wako Pure Chemical Industries, Ltd.), and they were made into a uniform solution. The solution was poured into a temporary vessel produced by fixing two parallel tempered glass plates with large-sized clips (a polyvinyl chloride tube had been interposed between the two glass plates with upper side open, so that the temporary vessel has formed between the tempered glass plates), and subjected to a reaction at 54°C for 15 hours and then at 90°C for 15 minutes to produce an acrylic plate (a near infrared absorption filter of the present invention) of 3 mm in thickness, containing about 4 mg/cm² of copper trifluoroacetate. The acrylic plate was measured for transmittance at 200 to 1,100 nm. As a result, a chart shown in Fig. 1 was obtained.

### Comparative Example 1

When, in Example 1, copper trifluoroacetate was changed to copper (II) acetate monohydrate (a product of Wako Pure Chemical Industries, Ltd.), copper (II) acetate monohydrate showed substantially no dissolution. The insoluble was separated by filtration. The filtrate (a slightly light blue solution) was poured into the same temporary vessel as used in Example 1 and subjected to the same operation as in Example 1 to produce an acrylic plate of 3 mm in thickness. The acrylic plate was measured for transmittance at 200 to 1,100 nm. As a result, there was no near infrared absorption as shown in Fig. 2, and substantially no copper (II) acetate monohydrate was present in the acrylic plate.

### Comparative Example 2

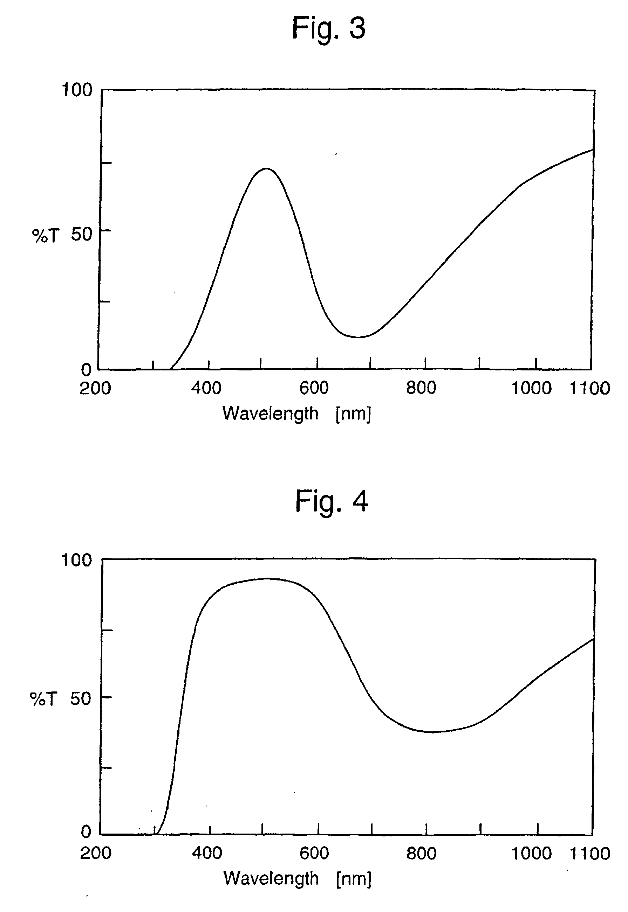

The same operation as in Example 1 was repeated except that copper trifluoroacetate was changed to copper (II) oleate, whereby was produced an acrylic plate of 3 mm in thickness, containing about 4 mg/cm² of copper (II) oleate. The acrylic plate was measured for transmittance at 200 to 1,100 nm. As a result, a chart shown in Fig. 3 was obtained. However, the maximum absorption wavelength was 671 nm and the absorption in near infrared region was small.

### Example 2

To 100 parts by weight of methyl methacrylate (a product of Tokyo Kasei Kogyo Co., Ltd.) were added 14.8 parts by weight of a crosslinking agent [NK Ester 9G (trade name), a product of Shin-Nakamura Chemical Co., Ltd.] which was a polymer having a PEG at the central moiety and methacryl group at the terminals), 1.5 parts by weight of copper trifluoroacetate and 0.3 part by weight of 2,2'-azobis(2,4-dimethylvaleronitrile) (a product of Wako Pure Chemical Industries, Ltd.). They were made into a uniform solution. The solution was poured into a temporary vessel produced by fixing two parallel tempered glass plates with large-sized clips (a polyvinyl chloride tube had been interposed between the two glass plates with upper side open, so that the temporary vessel has formed between the tempered glass plates), and subjected to a reaction at 54°C for 15 hours and then at 90°C for 15 minutes to produce an acrylic plate (a near infrared absorption filter of the present invention) of 3 mm in thickness, containing about 4 mg/cm² of copper trifluoroacetate. The acrylic plate was measured for transmittance at 200 to 1,100 nm. As a result, a chart shown in Fig. 4 was obtained.

### Example 3

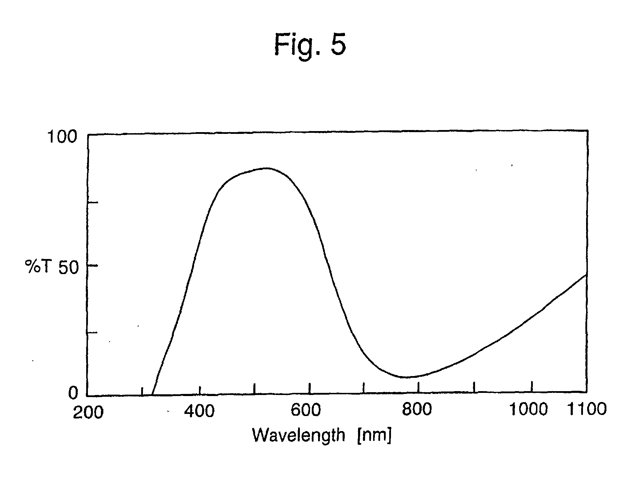

15 parts by weight of a polyvinyl butyrate resin [3000K (trade name), a product of Denki Kagaku Kogyo K.K.] was dissolved in 78.5 parts by weight of ethanol. To 1 part by weight of this ethanol solution was added 0.4 part by weight of copper trifluoroacetate, followed by sufficient stirring to obtain a solution. The solution was coated on a PET film [PET 100Ac(x) (trade name), a product of Panac K.K.], by casting using a bar coater (Doctor Blade YD-7, a product of Yoshimitsu Seiki K.K.) having a gap distance of 300 µm. The resulting material was dried at room temperature for 30 minutes, and then placed in a vacuum drier to conduct drying at 54°C for 2 hours under reduced pressure. The resulting film (a near infrared absorption filter of the present invention) had a thickness of 40 µm and contained about 8 mg/cm² of copper trifluoroacetate. The film was measured for transmittance at 200 to 1,100 nm. As a result, a chart shown in Fig. 5 was obtained.

As described above, the present invention can provide a transparent near infrared absorption filter having a very high transmittance for visible light and a high absorption for near infrared light, particularly a light of 800 nm and the vicinity, without containing phosphoric acid, thiourea or the like which has been essential in conventional techniques for (1) shifting of absorption spectrum of organic copper to near infrared side and (2) higher solubility of organic copper in solvent.

Further, the present invention can provide the above-mentioned near infrared absorption filter in a simple constitution at a low cost by a simple method using no special equipment.

## Claims

1. Use of a composition of a transparent polymer comprising copper trifluoroacetate in the form of a filter having a concentration of the copper trifluoroacetate per surface unit between 0,1 and 50 mg/cm² as a near infrared absorption filter.

2. Use of a composition according to claim 1, wherein the transparent polymer is composed mainly of polyvinyl alcohol, a polyvinyl butyrate or a poly(meth) acrylate.

3. A near infrared absorption filter comprising copper trifluoroacetate in an amount of 0,1 to 50 mg per cm² of the filter, said filter being produced using a composition, obtained by adding copper trifluoroacetate having a near absorption characteristic to a transparent polymer.

4. A near infrared absorption filter according to claim 3 wherein the transparent polymer is composed mainly of polyvinyl alcohol, a polyvinyl butyrate or a poly(meth) acrylate.

## Patentansprüche

1. Verwendung einer Zusammensetzung eines transparenten Polymers, umfassend Kupfertrifluoracetat, in der Form eines Filter mit einer Konzentration an dem Kupfertrifluoracetat pro Oberflächeneineinheit zwischen 0,1 und 50 mg/cm² als ein Nah-Infrarot-Absorptionsfilter.

2. Verwendung einer Zusammensetzung gemäß Anspruch 1, wobei das transparente Polymer hauptsächlich aus Polyvinylalkohol, einem Polyvinylbutyrat oder einem Poly-(meth)acrylat besteht.

3. Nah-Infrarot-Absorptionsfilter, umfassend Kupfertrifluoracetat in einer Menge von 0,1 bis 50 mg pro cm² des Filters, wobei der Filter unter Verwendung einer Zusammensetzung produziert wird, die durch Zugeben von eine Nah-Infrarot-Absorptions-Charakteristik aufweisendem Kupfertrifluoracetat zu einem transparenten Polymer erhalten wird.

4. Nah-Infrarot-Absorptionsfilter gemäß Anspruch 3, wobei das transparente Polymer haupt-aus Polyvinylalkohol, einem Polyvinylbutyrat oder einem Poly(meth)acrylat besteht.

## Revendications

1. Utilisation d'une composition d'un polymère transparent comprenant du trifluoroacétate de cuivre sous la forme d'un filtre ayant une concentration du trifluoroacétate de cuivre par unité de surface entre 0,1 et 50 mg/cm² en tant que filtre d'absorption dans l'infrarouge proche.

2. Utilisation d'une composition selon la revendication 1, où le polymère transparent se compose principalement d'alcool polyvinylique, d'un polyvinyl butyrate ou d'un poly(meth)acrylate.

3. Filtre à absorption dans l'infrarouge proche comprenant du trifluoroacétate de cuivre en une quantité de 0,1 à 50 mg par cm² du filtre, ledit filtre étant produit en utilisant une composition, obtenue par addition de trifluoroacétate de cuivre ayant une caractéristique d'absorption proche à un polymère transparent.

4. Filtre à absorption dans l'infrarouge proche selon la revendication 3, où le polymère transparent se compose principalement d'alcool polyvinylique, d'un polyvinyl butyrate ou d'un poly(meth)acrylate.
